Europäisches Patentamt

European Patent Office

Office européen des brevets

(19)

(11) Numéro de publication: **0 065 052
B1**

(12) **FASCICULE DE BREVET EUROPEEN**

(45) Date de publication du fascicule du brevet:
**29.08.84**

(51) Int. Cl.³: **A 01 D 85/00,** A 01 F 15/00

(21) Numéro de dépôt: **81400763.9**

(22) Date de dépôt: **13.05.81**

(54) **Presse à balles tandem.**

(43) Date de publication de la demande:
**24.11.82 Bulletin 82/47**

(45) Mention de la délivrance du brevet:
**29.08.84 Bulletin 84/35**

(84) Etats contractants désignés:
**DE FR GB IT NL**

(56) Documents cités:
**DE - A - 2 614 154
DE - A - 2 848 777
US - A - 3 016 675
US - A - 3 053 328
US - A - 4 178 010**

(73) Titulaire: **JOHN DEERE (Société Anonyme), 8, Quai de la Madeleine, F-45000 Orléans (FR)**

(72) Inventeur: **Giani, Angel, 17, Avenue Jean Dominique, F-70100 Gray-la-Ville (FR)**

(74) Mandataire: **Pruvost, Marc Henri et al, Cabinet ORES 6, Avenue de Messine, F-75008 Paris (FR)**

BUNDESDRUCKEREI BERLIN

## Description

La présente invention se rapporte d'une façon générale aux presses à balles cylindriques ou rondes du type comportant des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ par un ramasseur au cours de la progression de la presse et amenés en nappe à la chambre de formation de la balle. Lorsque la balle ainsi formée a atteint le diamètre requis, elle est soumise à une opération de liage, puis éjectée généralement par un système de porte prévu à l'arrière de la presse.

On comprend que les opérations de liage et d'éjection des balles formées dans la chambre de la presse exigent un certain laps de temps, pendant lequel la presse est à l'arrêt, ce qui réduit en conséquence le rendement d'une machine de ce type.

Un inconvénient des presses à balles rondes, dont les avantages par rapport aux presses à balles rectangulaires sont bien connus, réside justement dans cette réduction de rendement ou de capacité qui résulte des temps d'arrêt nécessaires au liage et à l'éjection.

Or la tendance actuell dans le machinisme agricole est d'augmenter autant que possible la capacité ou le rendement des machines ou appareils utilisés dans une exploitation.

Dans DE-A-2 614 154, ces temps d'arrêt ent été partiellement réduits par l'emploi d'un chariot situé à l'arrière de la presse et recevant la belle pour compléter la liage. Une autre solution (DE-A-2 848 777) consiste à disposer sur un bâti deux chambres successives, l'une pour la formation de la balle, l'autre pour son liage, un déplacement des parties supérieures des chambres simultanement avec les balles en formation permettart une alimentation du produit en continu, mais aussi une formation irrèguliere des balles.

Le but de l'invention est en conséquence de créer une presse à balles cylindriques de capacité ou de rendement accru ne présentant pas les inconvénients des presses existantes.

L'invention est matérialisée à at effet dans un ensemble pour la formation de balles cylindriques ou rondes du type dans lequel les produits de récolte amenés en nappe à une chambre de formation d'une balle au moyen d'un ramasseur ou dispositif équivalent subissent à l'intérieur de cette chambre un enroulement sous l'effet de bandes ou courroies entraînées de façon positive, pour former une balle cylindrique ou ronde par enroulement de cette nappe sur ellemême, caractérisée en ce qu'elle comprend, en tandem, deux presses à balles cylindriques élémentaires attelées l'une derrière l'autre, des moyens connus en soi prévus sur la presse à balles avant de l'attelage en tandem pour déplacer au moins le ramasseur de cette presse entre une position de travail dans laquelle il ramasse les produits de récolte en andain reposant sur le sol et une position relevée dans laquelle il passe au-dessus de ces produits de récolte en andain sans les ramasser, et des moyens conjugués à cette presse avant de l'attelage en tandem pour décharger latéralement les balles, formées dans ladite presse avant, après leur liage.

Ainsi, l'ensemble suivant l'invention permet de travailler sur le champ sensiblement en continu, en formant d'abord une balle cylindrique ou ronde dans la presse avant de l'attelage quand le ramasseur de cette presse occupe une position de travail ou position abaissée pour le ramassage des produits de récolte en andain, puis lorsque cette balle a atteint le diamètre requis en relevant ce ramasseur jusqu'à une position de repos de telle sorte que la presse avant de l'attelage puisse franchir librement ces produits de récolte en andain, qui sont alors ramassés par le ramasseur de la presse arrière en vue de la formation d'une autre balle dans celle-ci. Pendant cette formation, la balle de la presse avant peut alors être liée et éjectée latéralement à l'attelage, en principe sans arrêt de celui-ci.

Suivant un mode de réalisation paraissant avantageux, le châssis de la presse avant de l'attelage est de type relevable, ce qui permet d'obtenir, pendant de liage et l'éjection d'une balle formée dans cette presse avant, une garde au sol suffisante pour éviter en le franchissant tout dérangement de l'andain formé par les produits devant être ramassés par la presse arrière. Ainsi, le châssis de la presse avant peut être relié aux roues par des organes de réglage de hauteur assurant son relevage, notamment par des leviers ou bras pivotants combinés à des vérins tels que des vérins hydrauliques, ou directement par des vérins ou dispositifs équivalents. De façon judicieuse, le ramasseur peut alors être relié à une partie du châssis pivotant avec ces leviers ou bras reliés aux roues, de façon que non seulement il soit relevé avec ledit châssis, mais qu'il subisse en outre un mouvement de basculement vers le haut, augmentant encore la garde au sol au droit de ce ramasseur.

Dans un attelage du type faisant l'objet de l'invention, la presse arrière est attelée à l'arrière du châssis de la presse avant. Lorsque le châssis de cette presse avant est de type réglable en hauteur, il est prévu de préférence, entre ce châssis et le timon ou la flèche d'attelage de la presse arrière, un dispositif de compensation de hauteur, de façon à éviter le basculement vers l'arrière de cette presse arrière qui se produirait autrement lors du relevage de châssis de la presse avant. Suivant une réalisation jedicieuse, le point d'attelage de la presse arrière au châssis de la presse avant est prévu sur un organe qui est monté de façon déplaçable dans le sens ertical par rapport audit châssis de la presse avant, par exemple par coulissement, et relié à ce châssis par un dispositif de commande tel qu'un vérin ou analogue. La commande de ce vérin est alors jumelée à celle des vérins de relevage du châssis de la presse avant.

Dans un attelage comprenant deux presses en tandem suivant l'invention, il va de soi que les balles formées dans la presse avant ne peuvent pas être déchargées vers l'arrière de la façon classique. Comme indiqué, il est prévu à cet effet sur la presse avant des moyens de déchargement latéral de ces balles après leur liage. Suivant un mode de réalisation paraissant judicieux, il est prévu sur le châssis allongé de la presse avant, en arrière de la chambre de formation des balles, un chariot en forme de berceau ou de forme équivalente, qui est monté sur ce châssis de manière à pouvoir subir un déplacement transversal, par exemple dans des glissières transversales dudit châssis, sous l'action de moyens de commande appropriés tels qu'un vérin ou analogue. Ainsi, quand une balle formée dans la presse avant a été liée, la porte arrière de cette presse est relevée, ce qui dépose la balle sur le chariot précité, et les organes de commande de translation latérale du chariot sont alors commandés, pour amener ledit chariot dans une position latérale située en dehors du gabarit en largeur de l'ensemble de la presse.

Afin de pouvoir décharger la balle vers l'arrière en évitant ainsi l'arrêt de la machine qui serait autrement nécessaire pour le dégagement de la balle, le chariot comprend un châssis et une surface de réception en forme de berceau, cette surface pouvant pivoter par rapport à ce châssis du chariot, par exemple sous l'effet d'au moins un vérin. Ainsi, quand la balle doit être déchargée latéralement, la surface formant berceau du chariot bascule vers le bas dans sa partie arrière et la balle est déchargée vers l'arrière dudit chariot en position sortie, latéralement, ce qui évite toute gêne et en conséquence tout arrêt de la presse pendant le travail.

L'entraînement des organes mobiles de la presse arrière, notamment des bandes ou courroies de formation des balles et du ramasseur, peut être assuré de toute manière désirée, mais une solution paraissant avantageuse consiste à prévoir sur cette presse arrière un dispositif d'entraînement mécanique ou hydraulique, tel qu'un moteur hydraulique, relié à la presse avant ou au véhicule tracteur auquel l'ensemble est attelé et à partir duquel l'énergie requise est fournie.

On conçoit que l'invention permet ainsi d'obtenir une augmentation de capacité importante de la machine du fait de la suppression des temps morts autrement nécessaires pour le liage et l'éjection des balles formées. Ce résultat est atteint en outre avec une modification réduite au minimum des presses existantes, une telle modification étant limitée en fait au châssis de la presse avant, de sorte que même des presses existantes peuvent être adaptées en vue de la réalisation d'un ensemble en tandem suivant l'invention.

La description qui va suivre, faite en regard des dessins annexés, donnés à titre non limitatif, permettra de mieux comprendre l'invention.

La fig. 1 est une vue de profil schématique de l'ensemble pour la formation de balles rondes suivant l'invention.

La fig. 2 est une vue analogue à la fig. 1, mais montrant une autre position de travail.

Sur les dessins, on a désigné respectivement par les références 1 et 2 les presses élémentaires avant et arrière de l'ensemble suivant l'invention.

Chaque presse comprend, de la façon usuelle, une chambre 3, 4 dans laquelle une balle est formée chaque fois par enroulement des produits de récolte ramassés sur le sol, sous l'effet de jeux de bandes ou courroies en soi classiques, indiqués en 5 et 6 sur les dessins, la compensation de longueur requise étant réalisée par des rouleaux intermédiaires 7 et 8 montés sur des bras 9, 10 pouvant pivoter en 11, 12 sur le corps de chaque presse ainsi que par des rouleaux 7a, 8a portés par des leviers 9a, 10a pivotant en 11a, 12a. La mise en tension des bandes ou courroies 5, 6 est réalisée au moyen de ressorts 13, 14 d'une manière également en soi connue, les bandes ou courroies 5, 6 passant sur des rouleaux fixes de la machine, d'une manière usuelle. Un système de porte est prévu à l'arrière de chaque presse, comme indiqué schématiquement en 15, 16, chaque système de porte formant une partie du corps de la presse et portant les rouleaux arrière de renvoi des jeux de bandes ou courroies 5, 6. La presse avant 1 est équipée également d'une manière classique d'un timon ou d'une flèche d'attelage 17 destiné à être relié à un véhicule tracteur tel qu'un tracteur agricole.

Suivant l'invention, cette presse, qui est équipée de deux roues 18, comprend un châssis 19 ayant judicieusement une forme en U et comprenant une traverse arrière 20 et deux longerons latéraux 21 orientés vers l'avant. Les roues 18 sont montées de façon à pouvoir tourner librement sur des leviers 22 montés à pivotement en 23 vers les extrémités avant des longerons 21 du châssis 19 et comprenant des bras longitudinaux 24 de longueur notable et des bras verticaux plus courts 25 de chaque côté de la presse. Un vérin hydraulique 26 est monté entre l'extrémité libre du bras 25 de chaque levier 22 et une console 27 prévue sur le longeron 21 correspondant.

Le ramasseur 28 de la presse 1 est également relié dans le cas présent aux bras 25 des deux leviers latéraux 22 pour une raison qui sera indiquée plus loin. Ce ramasseur 28 pourrait d'ailleurs, si désiré, être relié au châssis de la presse avec interposition d'un dispositif de relevage.

Le châssis 19 de la presse porte, sur sa partie supérieure, un chariot 29 comprenant lui-même un châssis 30 et une surface formant berceau 31 de réception des balles. Ce berceau 31 est monté de façon pivotante autour d'une axe transversal 32 sur le châssis 30 du chariot 29. Ce châssis est lui-même monté sur des glissières ou chemins de roulement 33 orientés transversalement à la direction de marche de la presse, et son déplacement peut être commandé par un vérin (non représenté), ledit chariot étant alors sortil latéralement à la presse jusque dans une position dans laquelle il fait saillie hors du gabarit en largeur de celle-ci. Un vérin indiqué en 34 est prévu et prend la position fermée pour commander le basculement du berceau 31 vers l'arrière par rapport au châssis 30 en vue du déchargement d'une balle en sens opposé au sens de marche.

La presse arrière 2 est attelée à la presse avant 1 par un timon ou une flèche d'attelage 35. L'extrémité avant de cette flèche 35 est reliée à une console 36 qui peut coulisser verticalement par rapport à la traverse arrière 20 du châssis 10 de la presse avant 1, la position en hauteur de cette console 36 étant réglée au moyen d'un vérin 37 monté entre ladite console et un point fixe 38 relié au châssis 19 de la presse avant.

Le ramasseur de la presse arrière 2 a été indiqué en 39 et les roues de cette presse en 40.

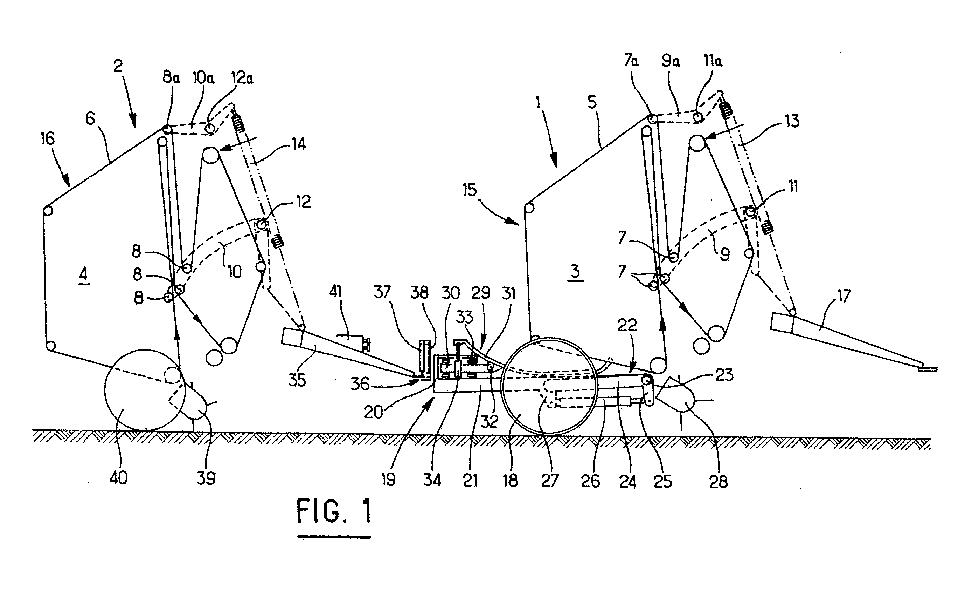

Suivant le mode de réalisation représenté sur la fig. 1, il est prévu sur la flèche d'attelage 35 un moteur hydraulique 41 qui est alimenté à partir du véhicule tracteur et qui assure l'entraînement des organes mobiles, notamment des bandes ou courroies 6 et du ramasseur 39, de la presse arrière 2.

Les vérins de la presse avant 1 sont également alimentés à partir du véhicule tracteur, et les organes mobiles de la presse avant 1 sont entraînés d'une manière en soi classique.

On décrira maintenant le fonctionnement et l'utilisation de l'ensemble tandem suivant l'invention.

Au début du travail dans le champ, les presses 1 et 2 occupent les positions représentées sur la fig. 1 c'est-à-dire que le châssis 19 de la presse avant 1 est abaissé et que le ramasseur 28 se trouve dans sa position de travail au voisinage du sol. Dans cette condition, pendant la progression de la machine, les produits de récolte reposant en andain sur le sol sont ramassés par ce ramasseur 28 comme dans le cas d'une presse classique et sont transférés en nappe, d'une manière non représentée, dans la chambre 3 de la presse 1, dans laquelle il se forme, par enroulement entre les deux brins intérieurs opposés des bandes ou courroies 5, une balle cylindrique ou ronde.

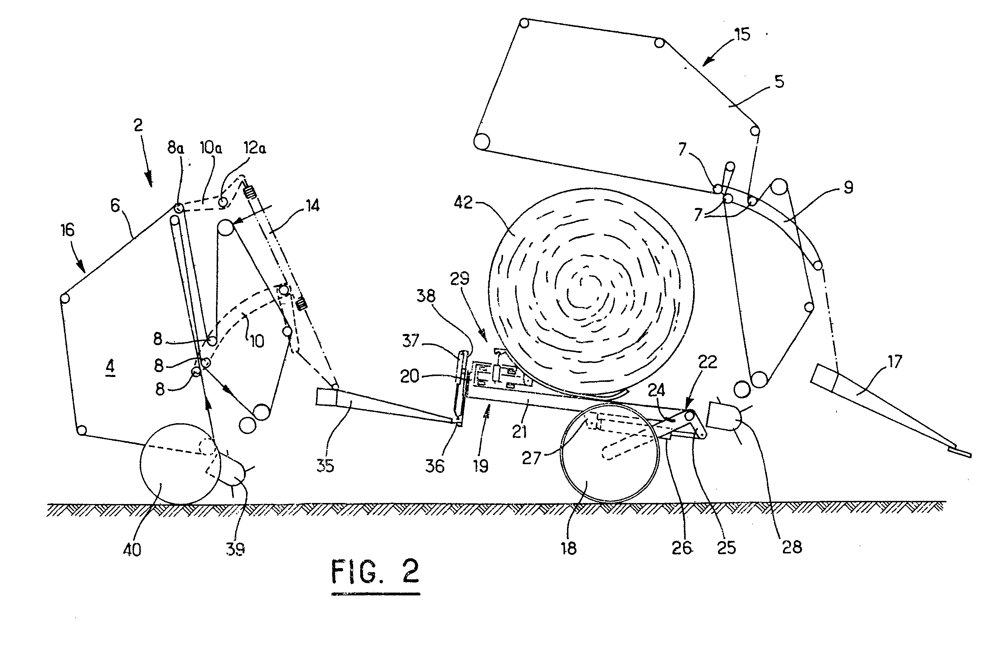

Quand cette balle a atteint le diamètre requis, les vérins hydrauliques 26 de la presse 1 sont alimentés, ce qui fait basculer les leviers 22 autour des pivots 23 dans le sens anti-horaire. Du fait de ce pivotement, le châssis 19 de la presse avant 1 est soulevé de la manière visible sur la fig. 2, puisque les vérins 26 sont montés entre le petit bras 25 des leviers 22 et la console 27 prévue sur le châssis 19.

Cette alimentation des vérins 26 peut être déclenchée par le conducteur du tracteur auquel l'ensemble tandem est attelée, ou bien par des moyens automatiques, par exemple par un palpeur actionné au moment ou la balle a atteint son diamètre maximum, d'une façon analogue à ce qui est le cas pour le déclenchement en soi connu de l'opération de liage.

Lors de ce relevage du châssis 19 et du pivotement des leviers 22, le ramasseur 28 est à la fois écarté du sol et basculé vers le haut pour venic occuper la position de repos visible sur la fig. 2.

Simultanément aux vérins 26, le vérin 37 est également alimenté en fluide et la sortie de sa tige compense le déplacement vers le haut de la traverse arrière 20 du châssis 19 de la presse avant 1, pour maintenir le point d'attelage 36 de la presse arrière 2 au même niveau par rapport au sol.

Dans cette condition, la presse avant passe audessus des produits de récolte disposés sur le sol en andain sans les déranger et en fait en enjambant l'andain, et ces produits de récolte sont alors repris par le ramasseur 39 de la presse arrière 2 et parviennent en nappe dans la chambre 4 de cette presse arrière, pour former une balle.

Pendant ce temps, le liage de la balle indiquée en 42 sur la fig. 2, qui a été formée dans la presse avant 1, est effectué. Après ce liage, la porte arrière 15 de la presse avant est relevée et la balle 42 peut parvenir sur le berceau 31 du chariot 29. Le vérin de commande du déplacement transversal de ce chariot 29 est alors actionné et ledit chariot vient, avec la balle qu'il porte, pour occuper une position située latéralement en dehors du gabarit en largeur de l'ensemble tandem. Lors de cette opération de déchargement, le vérin 34 est également commandé de façon à faire basculer le berceau 31 du chariot 29 dans le sens anti-horaire autour de l'axe 32, ce qui provoque le déchargement de la balle 42 vers l'arrière à côté de la presse.

On comprend que toutes ces opérations s'effectuent sans arrêt de l'ensemble tandem, et pendant qu'une autre balle se forme dans la chambre 4 de la presse arrière 2.

Quand la balle 42 a été déchargée sur le sol, le chariot 29 est rappelé en arrière, le berceau 31 est redressé et la porte 15 est refermée.

Quand la balle qui est formé dans la presse arrière 2 a atteint le diamètre requis, le conducteur du tracteur assure la commande des vérins 26 et 37 pour leur rentrée, ce qui abaisse le châssis 19 de la presse avant 1 pour le ramener dans la condition visible sur la fig. 1. Ce déclenchement peut d'ailleurs, si désiré, être assuré de façon automatique, au moyen d'un palpeur par exemple.

La condition obtenue est alors celle illustrée sur la fig. 1, de sorte qu'une nouvelle balle peut être formée dans la chambre 3 de la presse avant 1, tandis que la balle de la presse arrière 2 est liée, puis déchargée sur le sol par la porte arrière 16 derrière l'ensemble tandem, sans exiger d'arrêt de celle-ci.

On voit en conséquence que cette réunion de deux presses élémentaires en tandem, jointe à une modification ou appropriation en particulier de la presse avant, permet de réalisée une machine capable de travailler en continu et fournissant en conséquence un rendement nettement amélioré par rapport aux presses existantes, ceci sans modification fondamentale desdites presses.

Des modifications peuvent être apportées au mode de réalisation décrit, dans le domaine des équivalences techniques, sans s'écarter de l'invention.

**Revendications**

1. Ensemble pour la formation de balles cylindriques ou rondes du type dans lequel les produits de récolte amenés en nappe à une chambre de formation d'une balle au moyen d'un ramasseur ou dispositif équivalent subissent à l'intérieur de cette chambre un enroulement sous l'effet de bandes ou courroies entraînées de façon positive, pour former une balle cylindrique ou ronde par enroulement de cette nappe sur elle-même, caractérisée en ce qu'elle comprend, en tandem, deux presses à balles cylindriques élémentaires (1, 2) attelées l'une derrière l'autre, des moyens connus en soi, (22, 26) prévus sur la presse à balles avant (1) de l'attelage en tandem pour déplacer au moins le rammasseur (28) de cette presse entre une position de travail dans laquelle il ramasse les produits de récolte en andain reposant sur le sol et une position relevée dans laquelle il passe au-dessus de ces produits de récolte en andain sans les ramasser, et des moyens (29) conjugués à cette presse avant de l'attelage en tandem pour décharger latéralement les balles (42), formées dans ladite presse avant (1), après leur liage.

2. Ensemble suivant la revendication 1, caractérisé en ce que le châssis de la presse avant (1) de l'attelage (1, 2) est relevable.

3. Ensemble suivant la revendications 2, caractérisé en ce que le châssis (19) de la presse avant (1) est relié aux roues (18) de cette presse par des organes de réglage de hauteur.

4. Ensemble suivant la revendication 3, caractérisée en ce que ce châssis (19) de la presse avant (1) comprend des longerons (21) sur lesquels sont articulés des leviers (22) reliés aux roues (18), des vérins (26) étant montés entre ces longerons (21) ou une partie (27) reliée à ceux-ci et ces leviers (22) de façon à provoquer, lors de leur actionnement, le pivotement desdits leviers (22) et le relevage du châssis (19) par rapport aux roues (18).

5. Ensemble suivant la revendication 2, 3 ou 4, caractérisée en ce que le ramasseur (28) de la presse avant (1) est relié au châssis relevable (19).

6. Ensemble suivant la revendication 4, caractérisé en ce que le ramasseur (28) de la presse avant (1) est relié aux leviers pivotants (22) afin d'être à la fois relevé et basculé vers le haut lors du relevage du châssis (19) de cette presse avant.

7. Ensemble suivant l'une quelconque des revendications 2 à 6, caractérisée en ce que la presse arrière (2) est attelée (en 35, 36) à la partie arrière du châssis (19) de la presse avant (1) et en ce que des organes de réglage de hauteur (37) sont combinés aux organes d'attelage pour maintenir en principe la presse arrière (2) dans une position en hauteur stabilisé lors du relevage du châssis (19) de la presse avant (1).

8. Ensemble suivant la revendication 7, caractérisée en ce que ces organes de réglage de hauteur comprennent au moins un vérin (37) prévu entre les organes d'attelage (35, 36) de la presse arrière (2) et un support (38) porté par le châssis (19) de la presse avant (1).

9. Ensemble suivant les revendications 4 et 8, caractérisée en ce que les vérins (26) de relevage de la presse avant et le vérin (37) de réglage en hauteur de la presse arrière sont alimentés imultanément en fluide sous pression.

10. Ensemble suivant l'une quelconque des revendications précédentes, caractérisée en ce que le châssis (19) de la presse avant (1) porte à l'arrière un chariot (29) de réception des balles formées dans cette presse avant, ce chariot étant monté sur ce châssis (19) de manière à pouvoir subir un déplacement transversalement à la direction de marche de la presse jusque dans une position latérale située en dehors du gabarit en largeur de l'ensemble tandem, pour le déchargement des balles sur le côté de cette presse, des moyens étant prévus pour la commande de ce déplacement transversal du chariot (29).

11. Ensemble suivant la revendication 10, caractérisé en ce que le chariot (29) comprend un châssis (30) monté de façon déplaçable transversalement à la direction de marche de la presse et une surface formant berceau (31) montée de façon pivotante autour d'un axe transversal (32) sur ce châssis (30), des moyens d'actionnement (34) étant prévus entre ce châssis (30) du chariot (29) et ce berceau (31), pour commander le basculement de ce dernier par rapport au châssis dudit chariot lors de la sortie latérale de celui-ci, en vue du déchargement sur le sol de la balle reposant sur ledit berceau.

12. Ensemble suivant l'une quelconque des revendications précédentes, caractérisée en ce qu'un dispositif d'entraînement mécanique ou hydraulique (41), relié au véhicule tracteur auquel l'ensemble tandem est attelé, est prévu sur la presse arrière (2), pour assurer l'entraînement des organes mobiles de cette presse, notamment du ramasseur (39) et des bandes ou courroies (6) de formation des balles.

**Patentansprüche**

1. Anordnung zur Bildung von zylindrischen oder runden Ballen des Typs, bei der die in Form einer Bahn aufgenommenen Ernteprodukte mit Hilfe eines Aufsammlers oder einer äquivalenten Vorrichtung einer Kammer zum Bilden eines Ballens zugeführt und im Inneren dieser Kammer einer Aufrollung unter der Wirkung von Bändern oder Riemen unterworfen werden, welche positiv angetrieben werden, um einen zylindrischen oder runden Ballen durch Aufrollen der Bahn auf sich selbst zu bilden, dadurch gekennzeichnet, daß sie in Tandem-Anordnung zwei Grundpressen (1, 2) für zylindrische Ballen, die hintereinandergehängt sind mit Hilfe von an sich bekannten Mitteln (22, 26), die auf der vorderen Ballenpresse (1) der Tandemverbindung angeordnet sind, um wenigstens den Aufsammler (28) dieser Presse zwischen einer Arbeitsstellung, in der er die Ernteprodukte aufsammelt, die im Schwad am Boden liegen, und einer angehobenen Stellung zu verstellen, in der er sich oberhalb der im Schwad liegenden Ernteprodukte bewegt, ohne diese aufzusammeln, und Mittel (29) umfaßt, die dieser vorderen Presse der Tandemverbindung zugeordnet sind, um die Ballen (42), die in der besagten vorderen Presse (1) gebildet werden, nach ihrer Bildung seitlich zu entladen.

2. Anordnung nach Anspruch 1, dadurch gekennzeichnet, daß das Fahrgestell der vorderen Presse (1) der Tandemverbindung ( 1, 2) anhebbar ist.

3. Anordnung nach Anspruch 2, dadurch gekennzeichnet, daß das Fahrgestell (19) der vorderen Presse (1) mit den Rädern (18) dieser Presse über Höhenregelorgane verbunden ist.

4. Anordnung nach Anspruch 3, dadurch gekennzeichnet, daß das Fahrgestell (19) der vorderen Presse (1) Längsträger (21) aufweist, auf denen Hebel (22) schwenkbar angeordnet sind, die mit den Rädern (18) verbunden sind, daß Arbeitszylinder (26) zwischen den Längsträgern (21) oder einem Bereich (27), der mit diesen verbunden ist, und den Hebel (22) derart montiert sind, daß sie während ihrer Betätigung ein Verschwenken der genannten Hebel (22) und ein Anheben des Fahrgestells (19) gegenüber den Rädern (18) bewirken.

5. Anordnung nach Anspruch 2, 3 oder 4, dadurch gekennzeichnet, daß der Aufsammler (28) der vorderen Presse (1) mit dem hebbaren Fahrgestell (19) verbunden ist.

6. Anordnung nach Anspruch 4, dadurch gekennzeichnet, daß der Aufsammler (28) der vorderen Presse (1) mit den schwenkbaren Hebeln (22) verbunden ist, um während des Anhebens des Fahrgestells (19) dieser vorderen Presse als Ganzes angehoben und nach oben geschwenkt zu werden.

7. Anordnung nach irgendeinem der Ansprüche 2 bis 6, dadurch gekennzeichnet, daß die rückwärtige Presse (2) an dem rückwärtigen Bereich des Fahrgestells (19) der vorderen Presse (1) (bei 35, 36) angehängt ist und daß die Höhenregelorgane (37) mit Anhängeorganen kombiniert sind, um im Prinzip die rückwärtige Presse (2) in einer stabilisierten Höhenstellung während des Anhebens des Fahrgestells (19) der vorderen Presse (1) zu halten.

8. Anordnung nach Anspruch 7, dadurch gekennzeichnet, daß die Höhenregelorgane wenigstens einen Zylinder (37) umfassen, der zwischen den Anhängeorganen (35, 36) der rückwärtigen Presse (2) und einer Stütze (38) vorgesehen ist, die von dem Fahrgestell (19) der vorderen Presse (1) getragen werden.

9. Anordnung nach den Ansprüchen 4 und 8, dadurch gekennzeichnet, daß die Zylinder (26) zum Heben der vorderen Presse und der Zylinder (37) zur Höhenregelung der rückwärtigen Presse gleichzeitig mit einem Fluid unter Druck gespeist werden.

10. Anordnung nach irgendeinem der voranstehenden Ansprüche, dadurch gekennzeichnet, daß das Fahrgestell (19) der vorderen Presse (1) rückwärtig einen Schlitten (29) zur Aufnahme der Ballen trägt, die in dieser vorderen Presse gebildet werden, wobei dieser Schlitten auf dem Fahrgestell (19) in der Weise montiert ist, daß er einer Verstellung quer zur Fahrtrichtung der Presse bis in eine seitliche Stellung unterworfen werden kann, die außerhalb des breiten Profils der Tandem-Anordnung liegt, um die Ballen auf der Seite dieser Presse zu entladen, wobei Mittel vorgesehen sind, um die Querverschiebung des Schlittens (29) zu steuern.

11. Anordnung nach Anspruch 10, dadurch gekennzeichnet, daß der Schlitten (29) ein Gestell (30), das in Richtung quer zur Fahrtrichtung der Presse verschiebbar montiert ist, sowie eine wiegenförmige Fläche (31), die um eine Querachse (32) auf dem Gestell (30) schwenkbar montiert ist, und Betätigungsmittel (34) aufweist, die zwischen dem Gestell (30) des Schlittens (29) und der Wiege (31) angeordnet sind, um das Schwenken der letzteren in bezug auf das Gestell des genannten Schlittens zu steuern im Hinblick auf ein entladen des Ballens, der auf der Wiege aufliegt, zum Boden hin.

12. Anordnung nach irgendeinem der voranstehenden Ansprüche, dadurch gekennzeichnet, daß eine mechanische oder hydraulische Antriebsvorrichtung (41), die mit der Zugmaschine verbunden ist, an die die Tandem-Anordnung angehängt ist, auf der rückwärtigen Presse (2) vorgesehen ist, um den Antrieb der beweglichen Organe dieser Presse, insb. des Aufsammlers (39) und der Bänder oder Riemen (6) zur Bildung des Ballens sicherzustellen.

**Claims**

1. An assembly for forming cylindrical or round bales of the type in which the crop products which are fed in the form of a layer to a bale forming chamber by means of a pick-up apparatus or equivalent apparatus are subjected within said chamber to a rolling action under the effect of positively driven belts or bands to form a cylindrical or round bale by said layer of crop product being rolled around itself, characterised in that is comprises, in a tandem arrangement, two elementary cylindrical bale presses (1, 2) which are coupled one behind the other, per se known means (22, 26) provided on the front bale press (1) of the tandem coupling to displace at least the pick-up apparatus (28) of said press between an operating position in which it picks up the crop products in a windrow resting on the ground, and a raised position in which it passes over said crop products in a windrow without picking them up, and means (29) connected to said front press of the tandem coupling for laterally discharging the bales (42) formed in said front press (1) after binding thereof.

2. An assembly according to claim 1 characterised in that the chassis of the front press (1) of the tandem coupling (1, 2) can be raised.

3. An assembly according to claim 2 characterised in that the chassis (19) of the front press (1) is connected to the wheels (18) of said press by height adjusting members.

4. An assembly according to claim 3 characterised in that the chassis (19) of the front press (1) comprises longitudinal members (21) on which levers (22) connected to the wheels (18) are pivotally mounted, jacks (26) being mounted between said longitudinal members (21) or a member (27) connected thereto and said levers (22) such that, upon actuation thereof, they cause pivotal movement of said levers (22) and lifting of the chassis (19) with respect to the wheels (18).

5. An assembly according to claim 2, 3 or 4 characterised in that the pick-up apparatus (28) of the front press (1) is connected to the liftable chassis (19).

6. An assembly according to claim 4, characterised in that the pick-up apparatus (28) of the front press (1) is connected to the pivotal levers (22) so as to be both raised and pivoted upwardly when the chassis (19) of said front press is lifted.

7. An assembly according to any one of claims 2 to 6 characterised in that the rear press (2) is coupled (at 35, 36) to the rear part of the chassis (19) of the front press (1) and that beight adjusting members (37) are combined with the coupling members in order in principle to hold the rear press (2) in a stabilised position in respect of height when the chassis (19) of the front press (1) is lifted.

8. An assembly according to claim 7 characterised in that said height adjusting members comprise at least on jack (37) provided between the coupling members (35, 36) of the rear press (2), and a carrier (38) carried by the chassis (19) of the front press (1).

9. An assembly according to claim 4 and 8 characterised in that the jacks (26) for lifting the front press and the jack (37) for adjusting the height of the rear press are simultaneously supplied with fluid under pressure.

10. An assembly according to any one of the preceding claims, characterised in that the chassis (19) of the front press (1) carries at the rear a carriage (29) for receiving the bales formed in said front press, said carriage (29) being mounted on said chassis (19) in such a way as to be able to be displaced transversely to the direction of movement of the press into a lateral position disposed outside the widthwise dimension of the tandem assembly, for discharging the bales at the side of said press, means being provided for controlling said transverse displacement of the carriage (29).

11. An assembly according to claim 10 characterised in that the carriage (29) comprises a chassis (30) mounted so as to be displaceable transversely to the direction of movement of the press, and a cradle-forming surface (31) mounted pivotally about a transverse axis (32) on said chassis (30), actuating means (34) being provided between said chassis (30) of the carriage (29) and the cradle (31), to cause the pivotal movement of the latter with respect to the chassis of said carriage when it moves out laterally, for discharging the bale resting on said cradle, on the ground.

12. An assembly according to any one of the preceding claims characterised in that a mechanical or hydraulic drive means (41) which is connected to the tractor vehicle to which the tandem assembly is coupled is provided on the rear press (2) for driving the movable members of said press, in particular the pick-up apparatus (39) and the bale forming belts or bands (6).

FIG. 1

FIG. 2

0 065 052